# EUROPEAN PATENT SPECIFICATION

(11) **EP 0 344 624 B1**
(45) Date of publication and mention of the grant of the patent: **25.10.1995**
(21) Application number: 89109481.5
(22) Date of filing: 26.05.1989
(51) Int. Cl.: H04B 17/00, H04Q 7/20

(54) **Monitoring system for radio communication apparatus**
Überwachungssystem für Funkkommunikationsapparate
Système de surveillance pour appareil de radio-communication

(30) Priority: 28.05.1988 JP 131234/88
(43) Date of publication of application: 06.12.1989
(73) Proprietor: NEC CORPORATION, Tokyo (JP)
(72) Inventor: Shimizu, Toshimitsu, Minato-ku Tokyo (JP)
(74) Representative: VOSSIUS & PARTNER

(56) References cited:
- DE-A- 3 817 979
- US-A- 4 466 001
- US-A- 4 477 809
- US-A- 4 742 512

## Description

The present invention relates to a radio communication apparatus constructed of a base station, a plurality of portable units disposed around the base station and, in case of need, a relay unit connecting the base station with at least one portable unit, and more particularly, to a monitoring system for a radio communication apparatus for monitoring the operation of the portable unit and relay unit through the base station.

Conventionally, in a radio communication apparatus of this kind, the respective operations of the portable unit and the relay unit are cyclically monitored through the base station for a predetermined period in a polling manner. Namely, the base station transmits an inquiry signal to each of the portable (or relay) units and, then, the portable (or relay) unit which receives the inquiry signal replies an answer signal including information of operation states of the unit, i.e., normal or abnormal states of respective circuitary parts, to the base station. After the reception of the answer signal and a pre-programed treatment responsive to the answer signal, the base station sequentially transmits the inquiry signal to another unit. If the base station does not receive an answer signal from a unit for a predetermined period (a few seconds, for example) after transmitting the inquiry signal, the base station judges that the unit becomes in a trouble. In this case, the base station transmits the inquiry signal to a next unit after another treatment for the trouble.

In the aforementioned monitoring system of the prior art, however, the base station transmits the inquiry signal to each unit for a relatively short time period and, thus, each unit also transmits the answer signal indicating its state to the base station for such short time period. According to this system, the unit has to respond to the base station even if its operation state is not abnormal but normal. In this case, each unit is highly frequently accessed and responds for monitoring purpose. Therefore, this monitoring operation causes a wasteful power consumption. This power wastefulness is a serious problem in case the portable (or relay) unit is power-supplied by a battery and is located in remote rural areas.

US-A-4,466,001 describes a polling system for multiple terminal units. In this system, a base station transmits a reference signal which each terminal uses as a sync signal. Each unit having data to send to the base responds with a very brief signal such as a burst of silent carrier transmission during an assigned time slot in a queue of slots. Only those units which responded thus are polled during the subsequent polling cycle. During the transmission time slots, the base can be sending acknowledgements to those terminal units having sent messages during the previous polling cycle. While polling for data or acknowledgements or sending acknowledgements, the base can also be listening for the respective responses.

It is therefore an object of the present invention to provide a monitoring system for a radio communication apparatus and a method which are capable of efficiently monitoring portable and relay units without inviting wasteful power consumption.

This object is solved by the features of independent claims 1 and 4, respectively.

In particular the monitoring system for a radio communication apparatus including a base station and a plurality of portable units for monitoring a state of each of said portable units through said base station, comprises: means disposed in said base station for transmitting a first asking signal to each of said portable units for a predetermined short period; means disposed in each of said portable stations for replying a response signal in response to said first asking signal only when a state of each of said portable units becomes abnormal; means disposed in said base station for transmitting a second asking signal to each of said portable units in response to said response signal and for a predetermined long period; and means disposed in each of said portable units for transmitting a state signal to said base station in response to said second asking signal, said state signal indicating an operation state of each of said portable units.

### Brief Description of the Drawings

Fig. 1 is a block diagram of a radio communication apparatus to which the present invention can be applied;
Fig. 2 is a block diagram of a base station according to an embodiment of the present invention;
Fig. 3 is a block diagram of a portable unit according to the embodiment of the present invention;
Figs.4(a) and 4(b) are flow charts showing short-period monitoring operations of the base station and the portable unit;
Figs. 5(a) and 5(b) are flow charts showing long-period monitoring operations of the base station and the portable unit;
Figs. 6(a) and 6(b) shows signal-format examples of an inquiry signal and a state requiring signal transmitted from the base station to the portable unit, associated with the short-period monitoring operation and the long-period monitoring operation, respectively;
Figs. 7(a) and 7(b) show signal-format examples of a response signal and a state signal transmitted from the portable unit to the base station, associated with the short-period monitoring operation and the long-period monitoring operation, respectively; and
Figs.8(a) and 8(b) are flow charts showing monitoring operations which include short-period monitoring and long-period monitoring operations of the base station and the portable unit.

### Description of Preferred Embodiment of the Invention

The present invention will be described in the following in connection with one embodiment thereof with reference to the accompanying drawings.

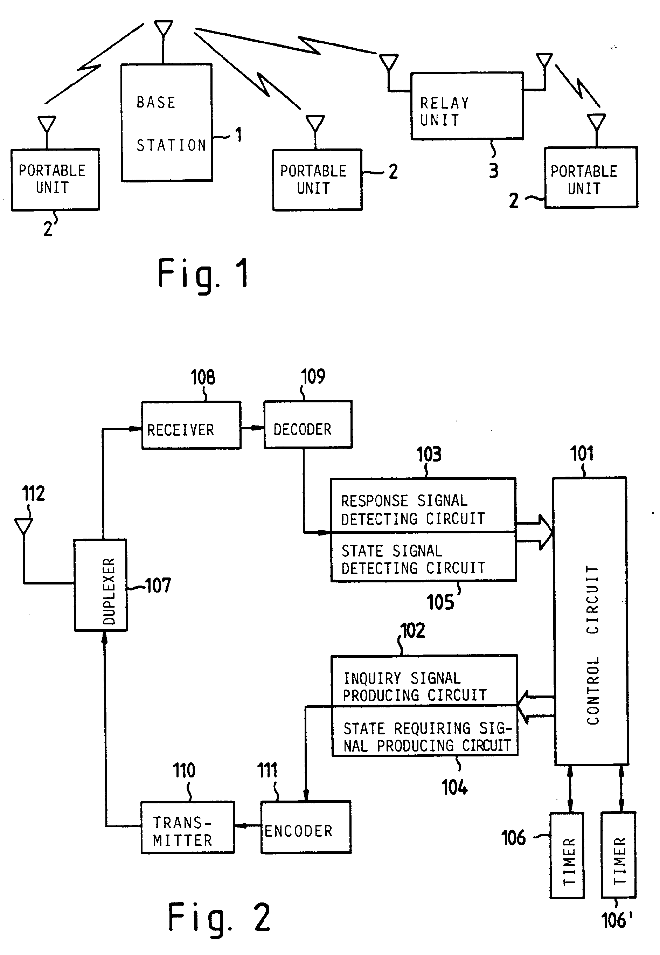

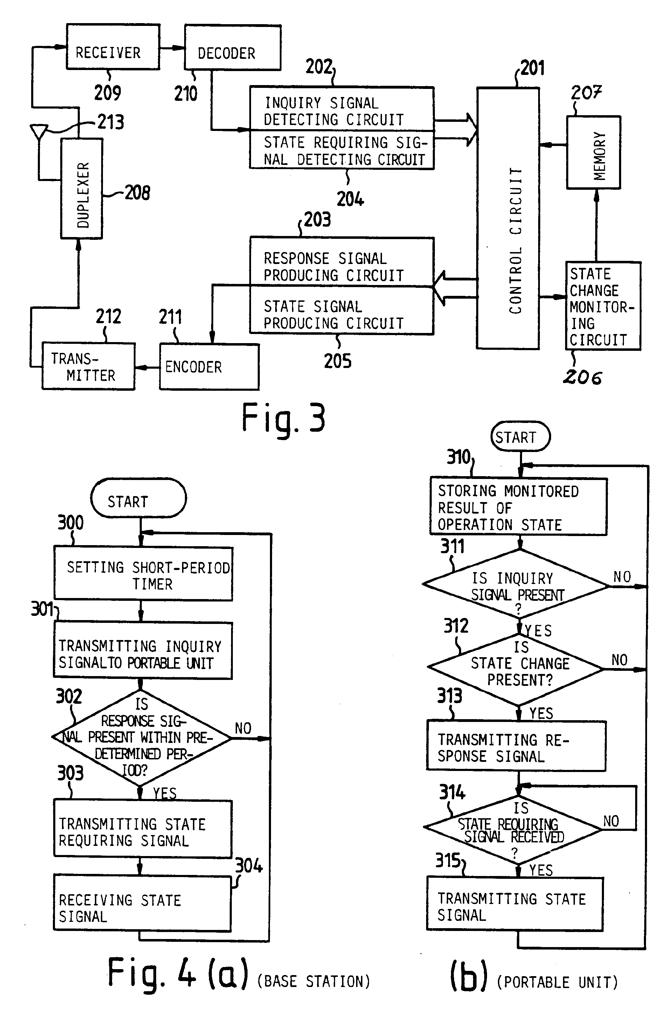

As shown in Fig. 1, a radio communication apparatus includes a base station 1, a plurality of portable units 2 and, in case of need, at least one relay unit 3 connecting the base station with a portable unit. Further, as shown in Fig. 2, the base station 1 is basically constructed of a control circuit 101, an inquiry signal producing circuit 102, a response signal detecting circuit 103, a state requiring signal producing circuit 104, a state signal detecting circuit 105, timer circuits 106 and 106′, a duplexer 107, a receiver 108, a decoder 109, a transmitter 110, an encoder 111 and an antenna 112. As shown in Fig. 3, on the other hand, the portable (or relay) unit is basically constructed of a control circuit 201, an inquiry signal detecting circuit 202, a response signal producing circuit 203, a state requiring signal detecting circuit 204, a state signal producing circuit 205, a state change monitoring circuit 206, a memory circuit 207, a duplexer 208, a receiver 209, a decoder 210, an encoder 211, a transmitter 212 and an antenna 213.

Next, the monitoring system of the present invention will be described with reference to the Drawings.

Under the control circuit 101 (Fig. 2) of the base station, there are provided timers 106 and 106′ for short and long time periods, upon which the base station performs monitoring operation for the short period (one second, for example) and the long period (one minute, for example).

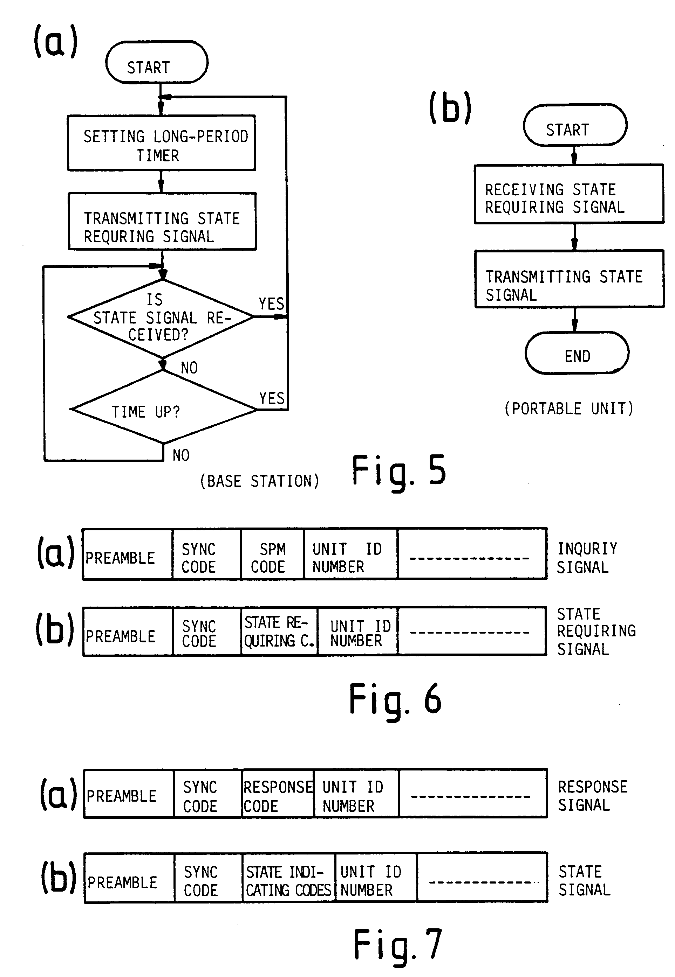

In the base station, as shown in Fig. 4(a), the control circuit 101 sets the short-period timer 106 (Step 300) and the inquiry signal producing circuit 102 produces the inquiry signal which is transmitted to one portable (or relay) unit (Step 301). In this case, the inquiry signal contains preamble, a sync code, a code SPM indicating a short-period monitoring operation and an identification (ID) number of the unit to which the base station transmits the inquiry signal, as shown in Fig. 6(a), and is transmitted through the encoder 111,, the transmitter 110 and the duplexer 107.

If the portable (or relay) unit has an operation state change and, thus, sends a response signal within a predetermined period, this signal is detected, through the antenna 112, the duplexer 107, the receiver 108 and the decoder 109, by the response signal detecting circuit 103. Fig. 7(a) shows an example of the response signal containing preamble, a sync code, a response code and the unit ID number. The control circuit 101 determines whether or not the reception is acknowledged within the predetermined period (Step 302). Within the predetermined period, if the response signal is not delivered from the portable (or relay) unit, the determination of the Step 302 is NO, and the routine is returned to the preceding Step 300, so that a next portable (or relay) unit is inquired whether an operation state change is present or not.

If, on the contrary, the reception acknowledgement is present within the predetermined time, the determination of the Step 302 is YES so that the routine is advanced to Step 303. At this Step 303, the control circuit 101 makes the state requiring signal producing circuit 104 transmit a state requiring signal to the unit which has delivered the response signal. As a result, the state requiring signal is transmitted out through the encoder 111, the transmitter 110, the duplexer 107 and the antenna 112. Fig. 6(b) shows an example of the state requiring signal containing preamble, a sync code, a state requiring code and the unit ID number. Thus, a state signal transmitted from the portable (or relay) unit is detected, through the antenna 112, the receiver 108 and the decoder 109, by the state signal detecting circuit 105 (Step 304). Fig. 7(b) shows an example of the state signal containing preamble, a sync code, state indicating codes and the unit ID number. As a result, the control circuit 101 obtains the state signal and accomplishes a predetermined treatment. After this, the routine is returned to the preceding Step 300, and a next portable (or relay) unit is inquired whether an operation state change is present, or not.

As shown in Fig. 3, in the portable (or relay) unit, on the other hand, the control circuit 201 controls the state change monitor circuit 206 to monitor the occurrence of an alarm or the like in its operation states so that the monitored result is stored and held into the memory circuit 207 (Step 310). At the same time, the determination of Step 311, i.e., whether the inquiry signal is received or not, is accomplished. Namely, the aforementioned inquiry signal delivered from the base station is received and detected by the inquiry signal detecting circuit 202, through the antenna 213, the duplexer 208, the receiver 209 and the decoder 210. If the inquiry signal is assigned to the unit itself, the reception acknowledgement is outputted to the control circuit 201.

As a result, the determination of the Step 311 is YES, and the control circuit 201 then accesses the memory circuit 207 to read out the stored content to determine whether or not the state has changed (Step 312). If NO, i.e., if the state is not changed and normal, the routine is returned to the preceding Step 310 so that the control circuit 201 performs the monitoring operation of the Steps 310 and 311. If YES, on the contrary, i.e., if the abnormal change (alarm) has been stored, the control circuit 201 makes the response signal producing circuit 203 produce the response signal so as to reply it to the base station. As a result, the response signal is transmitted out through the encoder 211, the transmitter 212, the duplexer 213 and the antenna 213 (Step 313).

After this, when the base station transmits the state requiring signal, this signal is received and detected by the state require signal detecting circuit 204, through the antenna 213, the duplexer 208, the receiver 209 and the decoder 210. If the state requiring signal is assigned to the unit, the detection result is informed to the control circuit 201. As a result, this control circuit 201 performs a determination of Step 314. With the reception acknowledgement, i.e., YES of the Step 314, the control circuit 201 makes the state signal producing circuit 205 transmit the state signal indicating the operation states of respective circuitary parts at present. As a result, the state signal is transmitted out through the encoder 211, the transmitter 212, the duplexer 208 and the antenna 213 (Step 315). After this, the control circuit 201 continues the unit monitoring operation (the Step 310).

By the above-mentioned short-period monitoring operation, the base station can detect the unit, in which the operation state is changed to the alarmed state. However, it is conceivable that a portable (or relay) unit is disabled to return the response because of a malfunction such as troubles in the transmitter, the receiver or the power source. Therefore, the base station has a performance of a long-period monitoring operation, in parallel with the short-period monitoring operation thus far described. Figs. 5(a) and 5(b) are flow charts showing monitoring operations of the base station and the portable (or relay) unit according to the long-period monitoring operation. As shown in Fig. 5(a), the base station sequentially transmits a state requiring signal to each of the portable (or relay) units at a relatively long cycle period (one minute, for example). Thus, each of the portable (or relay) units replies a state signal to the base station as shown in Fig. 5(b).

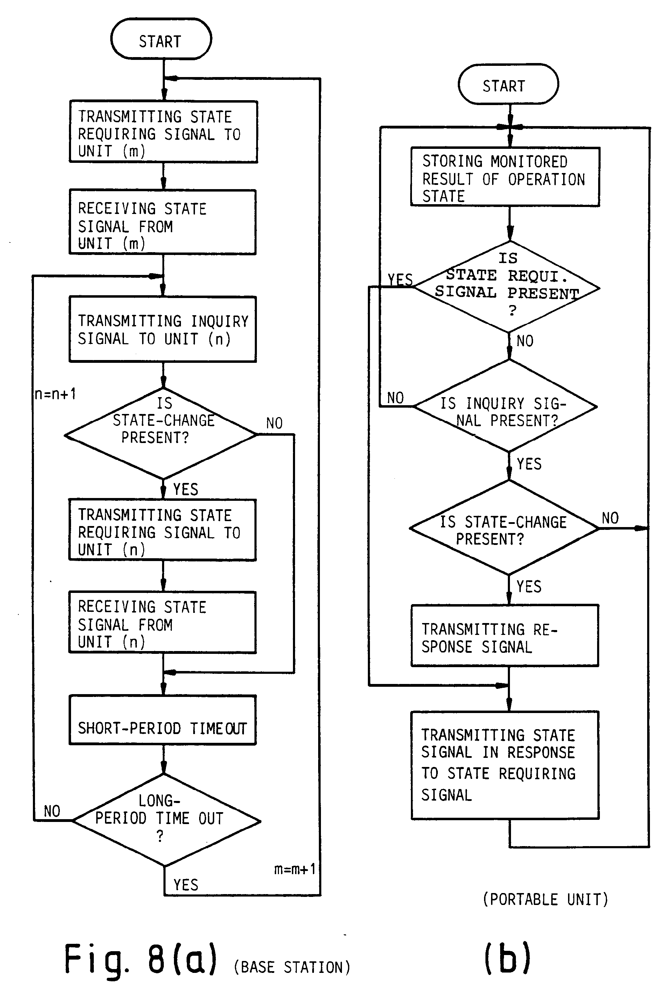

Fig. 8(a) and 8(b) are flow charts showing combination flows of long-period monitoring operation and short-period monitoring operation of the base station and the portable (or relay) unit according to the present invention.

As described in detail hereinbefore, according to the present invention, each portable or relay unit is asked at a short cycle period whether or not its operation state is changed to raise an alarm and is required to inform the present operation status to the base station at a long cycle period. Each unit can be monitored, and only the unit having an operation state change transmits it to the base station for the short-period inquiry. Thus, there can be attained effects that any useless transmission is eliminated and that the power consumption is reduced.

## Claims

1. A monitoring system for a radio communication apparatus including a base station (1) and a plurality of portable units (2) for cyclically monitoring the operational state of each of said portable units (2) through said base station (1) comprising:
means (101, 102, 106, 111, 110) disposed in the base station (1) arranged for setting a predetermined short time period and transmitting an inquiry signal to a portable unit (2);
means (203, 211, 212) disposed in each of the portable units (2), for sending a response signal in reply to an inquiry signal only when the operational state of the respective portable unit (2) has become abnormal;
means (101, 104, 106, 106′, 111, 110) disposed in the base station (1) for transmitting a first state requiring signal to said portable unit (2) only if said response signal is received within said predetermined short time period;
said means (101, 104, 106, 106′, 111, 110) disposed in said base station (1) for transmitting a first state requiring signal being further arranged for setting a pre-determined long time period and transmitting a second state requiring signal to a portable unit (2);
means (201, 205, 211, 212) disposed in each of said portable units (2) for transmitting a state signal to said base station (1) in response to receipt of either said first or said second state requiring signal, said state signal indicating the operational state of the respective replying portable unit (2);
said means disposed in the base station (1) being so arranged that inquiry signals are cyclically sent to each of said portable units (2) with a relatively short cycle period and that second state requiring signals are sent to each of said portable units (2) with a relatively long cycle period.

2. A monitoring method for a radio communication apparatus including a base station (1) and a plurality of portable units (2) for cyclically monitoring the operational state of each of said portable units (2) through said base station (1), comprising:
a step of setting a predetermined short time period and transmitting an inquiry signal from said base station (1) to a portable unit (2);
a step of sending a response signal from the respective portable unit (2) in reply to an inquiry signal only when the operational state of the respective portable unit (2) has become abnormal;
a step of transmitting a first state requiring signal from the base station (1) to said portable unit (2) only if said response signal is received within said predetermined short time period;
a step of setting a predetermined long time period and transmitting a second state requiring signal from the base station (1) to a portable unit (2);
a step of transmitting a state signal from each replying portable unit (2) to said base station (1) in response to the receipt of either said first or said second state requiring signal, said state signal indicating the operational state of the respective replying portable unit (2); and
a step of cyclically sending inquiry signals from the base station (1) to each of said portable units (2) with a relatively short cycle period and sending second state requiring signals to each of said portable units (2) with a relatively long cycle period.

## Patentansprüche

1. Überwachungssystem für eine Funkkommunikationsapparatur, die eine Basisstation (1) und mehrere tragbare Einheiten (2) umfaßt, zum zyklischen Überwachen des Betriebsstatus jeder tragbaren Einheit (2) durch die Basisstation (1) mit:
einer in der Basisstation (1) angeordneten Einrichtung (101, 102, 106, 111, 110), die zum Setzen einer vorbestimmten kurzen Zeitperiode und zum Übertragen eines Abfragesignals an eine tragbare Einheit (2) eingerichtet ist;
einer in jeder tragbaren Einheit (2) angeordneten Einrichtung (203, 211, 212) zum Senden eines Antwortsignals als Antwort auf ein Abfragesignal nur dann, wenn der Betriebsstatus der jeweiligen tragbaren Einheit (2) abnormal geworden ist ;
einer in der Basisstation (1) angeordneten Einrichtung (101, 104, 106, 106′, 111, 110) zum Übertragen eines ersten Statusanforderungssignals an die tragbare Einheit (2) nur dann, wenn das Antwortsignal innerhalb der vorbestimmten kurzen Zeitperiode empfangen wird;
wobei die in der Basisstation (1) angeordnete Einrichtung (101, 104, 106, 106′, 111, 110) zum Übertragen eines ersten Statusanforderungssignals ferner zum Setzen einer vorbestimmten langen Zeitperiode und zum Übertragen eines zweiten Statusanforderungssignals an eine tragbare Einheit eingerichtet ist;
einer in jeder tragbaren Einheit (2) angeordneten Einrichtung (201, 205, 211, 212) zum Übertragen eines Statussignals an die Basisstation (1) als Reaktion auf den Empfang entweder des ersten oder des zweiten Statusanforderungssignals, wobei das Statussignal den Betriebsstatus der jeweiligen tragbaren Einheit (2) anzeigt;
wobei die in der Basisstation (1) angeordnete Einrichtung so eingerichtet ist, daß Abfragesignale zyklisch an jede tragbare Einheit (2) mit einer relativ kurzen Zyklusperiode gesendet werden und daß zweite Statusanforderungssignale an jede tragbare Einheit (2) mit einer relativ langen Zyklusperiode gesendet werden.

2. Überwachungsverfahren für eine Funkkommunikationsapparatur, die eine Basisstation (1) und mehrere tragbare Einheiten (2) umfaßt, zum zyklischen Überwachen des Betriebsstatus jeder tragbaren Einheit (2) durch die Basisstation (1) mit:
einem Schritt zum Festlegen einer vorbestimmten kurzen Zeitperiode und zum Übertragen eines Abfragesignals von der Basisstation (1) an eine tragbare Einheit (2);
einem Schritt zum Senden eines Antwortsignals von der jeweiligen tragbaren Einheit (2) als Antwort auf ein Abfragesignal nur dann, wenn der Betriebsstatus der jeweiligen tragbaren Einheit (2) abnormal geworden ist;
einem Schritt zum Übertragen eines ersten Statusanforderungssignals von der Basisstation (1) an die tragbare Einheit (2) nur dann, wenn das Antwortsignal innerhalb der vorbestimmten kurzen Zeitperiode empfangen wird;
einem Schritt zum Festlegen einer vorbestimmten langen Zeitperiode und zum Übertragen eines zweiten Statusanforderungssignals von der Basisstation (1) an eine tragbare Einheit (2);
einem Schritt zum Übertragen eines Statussignals von jeder antwortenden tragbaren Einheit (2) an die Basisstation (1) als Reaktion auf den Empfang entweder des ersten oder des zweiten Statusanforderungssignals, wobei das Statussignal den Betriebsstatus der jeweils antwortenden tragbaren Einheit (2) anzeigt; und
einem Schritt zum zyklischen Senden von Abfragesignalen von der Basisstation (1) an jede tragbare Einheit (2) mit einer relativ kurzen Zyklusperiode und zum Senden zweiter Statusanforderungssignale an jede tragbare Einheit (2) mit einer relativ langen Zyklusperiode.

## Revendications

1. Système de surveillance pour un appareil de communication radio incluant une station de base (1) et une pluralité d'unités portables (2) pour surveiller cycliquement l'état de fonctionnement de chacune desdites unités portables (2) par l'intermédiaire de ladite station de base (1), comprenant :
un moyen (101, 102, 106, 111, 110) disposé dans la station de base (1) agencé pour établir une période temporelle courte prédéterminée et pour transmettre un signal d'interrogation à une unité portable (2) ;
un moyen (203, 211, 212) disposé dans chacune des unités portables (2) pour envoyer un signal de réponse en réponse à un signal d'interrogation seulement lorsque l'état de fonctionnement de l'unité portable respective (2) est devenu anormal ;
un moyen (101, 104, 106, 106′, 111, 110) disposé dans la station de base (1) pour émettre un premier signal d'interrogation d'état sur ladite unité portable (2) seulement si ledit signal de réponse est reçu dans ladite période temporelle courte prédéterminée ;
ledit moyen (101, 104, 106, 106′, 111, 110) disposé dans ladite station de base (1) pour émettre un premier signal d'interrogation d'état étant en outre agencé pour établir une période temporelle longue prédéterminée et pour émettre un second signal d'interrogation d'état sur une unité portable (2) ;
un moyen (201, 205, 211, 212) disposé dans chacune desdites unités portables (2) pour émettre un signal d'état sur ladite station de base (1) en réponse à une réception de soit ledit premier signal d'interrogation d'état soit ledit second signal d'interrogation d'état, ledit signal d'état indiquant l'état de fonctionnement de l'unité portable de réponse respective (2) ;
ledit moyen disposé dans la station de base (1) étant agencé de telle sorte que des signaux d'interrogation soient envoyés cycliquement sur chacune desdites unités portables (2) moyennant une période cyclique relativement courte et de telle sorte que des seconds signaux d'interrogation d'état soient envoyés sur chacune desdites unités portables (2) moyennant une période cyclique relativement longue.

2. Procédé de surveillance pour un appareil de communication radio incluant une station de base (1) et une pluralité d'unités portables (2) pour surveiller cycliquement l'état de fonctionnement de chacune desdites unités portables (2) par l'intermédiaire de ladite station de base (1), comprenant :
une étape d'établissement d'une période temporelle courte prédéterminée et d'émission d'un signal d'interrogation depuis ladite station de base (1) sur une unité portable (2) ;
une étape d'envoi d'un signal de réponse depuis l'unité portable respective (2) en réponse à un signal d'interrogation seulement lorsque l'état de fonctionnement de l'unité portable respective (2) est devenu anormal ;
une étape d'émission d'un premier signal d'interrogation d'état depuis la station de base (1) sur ladite unité portable (2) seulement si ledit signal de réponse est reçu dans ladite période temporelle courte prédéterminée ;
une étape d'établissement d'une période temporelle longue prédéterminée et d'émission d'un second signal d'interrogation d'état depuis la station de base (1) sur une unité portable (2) ;
une étape d'émission d'un signal d'état depuis chaque unité portable de réponse (2) sur ladite station de base (1) en réponse à la réception de soit ledit premier signal d'interrogation soit ledit second signal d'interrogation d'état, ledit signal d'état indiquant l'état de fonctionnement de l'unité portable de réponse respective (2) ; et
une étape consistant à envoyer cycliquement des signaux de demande de renseignement depuis la station de base (1) sur chacune desdites unités portables (2) moyennant une période cyclique relativement courte et consistant à envoyer des seconds signaux d'interrogation d'état sur chacune desdites unités portables (2) moyennant une période cyclique relativement longue.
